# EUROPEAN PATENT SPECIFICATION

(11) **EP 1 501 904 B1**
(45) Date of publication and mention of the grant of the patent: **23.11.2005**
(21) Application number: 03723521.5
(22) Date of filing: 01.05.2003
(51) Int. Cl.: C09D 167/06, C09D 163/10, C09D 175/14, B29C 63/34

(54) **USE OF A CURABLE RESIN COMPOSITION FOR (RE)LINING OF PIPE SYSTEMS, ETC.**
VERWENDUNDG EINER HÄRTBAREN HARZZUSAMMENSETZUNG ZUM (WIEDER)AUSKLEIDEN EINER ROHRLEITUNG U. Ä.
USAGE DE COMPOSITION DE RESINE DURCISSABLE POUR LE (RE)GARNISSAGE DE CIRCUITS DE TUYAUTAGE, ETC.

(30) Priority: 03.05.2002 NL 1020533
(43) Date of publication of application: 02.02.2005
(73) Proprietor: DSM IP Assets B.V., 6411 TE Heerlen (NL)
(72) Inventor: BESTEN DEN, Cornelis, NL-8081 TM Elburg (NL)
(74) Representative: Verhaegen, Ilse Maria M.
(86) International application number: PCT/NL2003/000321
(87) International publication number: WO 2003/093381

(56) References cited:
- EP-A- 0 326 276
- EP-A- 0 844 076
- DE-A- 19 652 812
- GB-A- 1 488 589
- US-A- 3 953 395
- US-A- 4 154 896
- US-A- 4 900 763
- US-A- 5 360 863
- US-A- 5 747 597
- US-A- 5 906 789
- PATENT ABSTRACTS OF JAPAN vol. 1997, no. 02, 28 February 1997 (1997-02-28) & JP 08 283357 A (DAINIPPON INK &CHEM INC), 29 October 1996 (1996-10-29)

## Description

The invention relates to the use of a curable resin composition in (re)lining containing a curable resin dissolved in a copolymerizable free monomer to which an initiator and optionally other additives have been added. The invention also relates to the use of such a curable resin composition in flexible, sleeve-shaped objects for use in (re)lining. The invention further relates to a process for (re)lining a tube, tank or vessel with such a flexible, sleeve-shaped object.

In the framework of the present invention (re)lining is understood to be the provision on the inside of a hollow object or system, such as a pipe system (for example a sewage system, industrial line system or a transport line), a vessel or a tank and the like, of a suitable coating with a thickness of at least 2 mm, but usually more than 6 mm and even up to 30 - 40 mm. The coating layer generally has the object of contributing to the mechanical strength and ensuring the resistance of the hollow object or system to chemicals, corrosion, etc., as well as prevention of leaks. It should be noted that when a hollow object or system is for the first time coated on the inside with a lining (also known as internal coating), this is referred to as lining. Each subsequent time that a hollow object or system that is already intemally lined is coated with an internal coating, this is called relining. The term (re)lining therefore refers to all situations where the lining is provided either for the first time or for any subsequent time.

Until now various (re)lining techniques have been known. Generally use is made of flexible, sleeve-shaped objects, impregnated with a curable resin composition, of such dimensions, that the hollow object or system that is to be lined internally can be adequately lined therewith. This method is also known as "Schlauchrelining" in German. The flexible, sleeve-shaped objects used in (re)lining usually consist of at least one waterproof layer that is impermeable to the uncured resin (barrier layer) and of a supporting or reinforcing material that is impregnated with a curable resin composition. The layer that is impermeable to the uncured resin is usually to a certain extent permeable to the solvent in which the resin composition is incorporated. The supporting material generally determines the thickness of the (re)lining. The supporting material can also ensure mechanical strength and as such - optionally in combination with any fillers present - also function as a reinforcing material.

In the (re)lining applied until now by the person skilled in the art use is generally made especially of vinyl ester resins, unsaturated polyester resins (UPs) or epoxy resins dissolved in styrene.

In approximately 80% of the (re)lining activities carried out in practice until now use was made of thermal curing of the resin compositions (which is also referred to as "hot cure"). Hot cure is understood to be the curing of the resin composition impregnated in the flexible, sleeve-shaped objects by means of heat originating from the heated water or gas that is used to pressurize the (re)lining. In the other 20% of the (re)lining activities carried out in practice until now use was made of curing using irradiation with light of a suitable wavelength (photo-irradiation). This is also referred to as UV cure. The light energy is generally supplied via lamps placed or moved forward in the hollow objects.

When use is made of a hot-cure system the main problem encountered, in the curing phase but also already when preparing the (re)lining, is that styrene escapes as a volatile component and/or penetrates the layer that is impermeable - to the uncured resin - during the hot-cure step and ends up in the process liquid (or the process gas) used for pressurization. This often leads to considerable environmental problems, as for example described in "Untersuchungen der Styrolemissionen beim Schlauchrelining, Stand des Forschungsprojektes in Bielefeld" (B.I. Umweltbau, 1/02, 70-71).

It is true that a UV cure gives less penetration problems, but the odour problems are still considerable, in the phase during which application of the (re)lining is prepared, but also during the curing thereof, all the more so since in that case volatile styrene can escape into the gas phase that is present above the (re)lining that is being cured. This is the case even at the prevailing overpressure during curing, and is subsequently manifested in particular when the gas phase used is ultimately relieved of pressure. Use of a UV cure in combination with a process liquid instead of a process gas for internal pressurization of the (re)lining in the hollow system of course also presents the problem of styrene diffusion to the process liquid. When a (re)lining is subjected to UV curing, the protective layer (barrier layer) is optionally removed after curing.

A resin composition commonly used for hot-cure (re)lining from the prior art is known from for example EP-A-0391270. That resin composition consists of an unsaturated polyester resin (UP resin) that is soluble in styrene or methyl methacrylate and a thermoplastic that is soluble in styrene or methyl methacrylate while being incompatible with that UP resin (that is to say, the thermoplastic should not react with the UP resin). Suitable thermoplastics include polystyrene, polyvinyl acetate and polyacrylate or polymethacrylate.

A disadvantage of those known resin compositions according to EP-A-0391270 is the presence of considerable residual quantities of volatile components (such as for example styrene or methyl methacrylate), as a result of which volatile components gradually escape, at least in the first few weeks/months after laying such pipe systems, but even during the envisaged long-term use thereof, and cause an undesirable odour, and possibly even also toxic effects.

(Re)linings are generally applied in layer thicknesses of at least 2 mm (or per layer of the laminate), but usually more than 6 mm and even up to 30 to 40 mm. The layer thickness of a (re)lining is generally chosen to be thicker as the diameter of the hollow object increases.

(Re)linings are clearly distinguished from so-called coating applications, for which the layer thickness generally amounts to a maximum of 0.5 mm and for which entirely different requirements are specified for the surface of the layer (and for the adhesion to the substrate). As a rule a coating will, for example, have to meet high requirements as regards surface drying (in particular when being cured to the air), scratch resistance, and curability.

Another difference between coatings and (re)linings is the fact that coatings are generally applied to an external surface. It is true that (thin) coating layers are also applied to the inside of hollow objects, tubes, hollow fibres and the like, but on the one hand these are usually applied so as to adhere to that inside, and on the other hand they also serve another purpose than in the case of (re)lining. It should furthermore be noted that floor or wall finishing layers are not considered to be coatings in the framework of this application.

As a consequence, coatings are actually never considered to be "structural layers", while (re)linings are. As regards structural properties they are therefore more comparable to structural objects to be produced using "closed-mould" techniques.

While it is true that improvements have already been sought - in coating applications - by replacing styrene in these applications with other components (see for example JP-A-09151225 and JP-A-10158364), but these systems (which are only suitable for coating applications) have never gained entrance to the (re)lining market, because the properties to be obtained therewith are inadequate in structural applications and because several of the used components are difficult to obtain.

JP-A-09151225 for example describes a curable resin composition consisting of (A) an unsaturated polyester or an epoxy (meth)acrylate and (B) an unsaturated monomer polymerizable with (A) and consisting of an oligo (n = 2-15) ether monoalkyl (1-18C)-ether(meth)acrylate of a C3-C4 diol and also (C) a wax. The wax is applied because good surface drying is required for the coatings. Though these compositions are recommended according to the relevant abstract for amongst other things lining, this is not in the sense as intended in the present application. The resin compositions of JP-A-09151225 are referred to as "low-odour" (upon processing; at 30 cm from the nose), dry well to the air and are water resistant. Apart from the disadvantage of this resin composition, that a fairly exotic compound is used in it, such resin compositions are absolutely unsuitable for (re)lining in the sense of the present invention. This is because the resin compositions of JP-A-09151225 are typical cold-cure systems that do not have a long pot life (that is to say a sufficiently long stability in storage after impregnation, as a rule a minimum of a few days) and cure within an hour. They cannot therefore be used for (re)lining using the processes involving flexible sleeves.

JP-A-10158364 describes a curable resin composition consisting of (A) 5-70 wt.% of an unsaturated polyester dissolved in (B) 95-30 wt.% dicyclopentenyloxyalkyl (2-12C)-(meth)acrylate, or in dicyclopentenyloxaalkylene (4-12C)-(meth)acrylate that is polymerizable with (A). These resin compositions are referred to as "low-odour" and have a high flash point. According to the abstract they are recommended for amongst other things cement lining, but this, too, does not concem (re)lining in the sense as meant in the present application. These compositions act as a binder, as it were, and consequently they are actually used in particular as a type of primer. These resin compositions, too, are rapidly hardening cold-cure systems and therefore do not have a long pot life. They cannot therefore be used for (re)lining using the processes involving flexible sleeves.

There have been other efforts to limit the diffusion and to obtain "low-odour" resin compositions, but these have so far still proved to be inadequate. Examples of such laborious alternative methods are the application of other barrier layers, such as polyamide. The volatile components such as styrene cannot diffuse through the polyamide layer. A disadvantage of such a polyamide layer, when used for hot curing, is that the sleeve-shaped objects are no longer flexible, which makes it difficult to introduce them into the pipe systems.

There is, therefore, still a need for resin compositions for use in the (re)lining of pipe systems that show low emission or penetration of volatile components. It is important that the resin composition has a sufficiently long stability in storage after impregnation (pot life, in the presence of the curing system) without curing starting.

The inventors have now surprisingly found that the said disadvantages from the prior art can be overcome when, for use in (re)lining, a curable resin composition is applied that contains a curable resin dissolved in a copolymerizable free monomer and to which an initiator and optionally other additives have been added, the curable resin composition consisting in particular of:
(A) 30-70 wt.% of an unsaturated polyester resin, a vinyl ester resin, a vinyl ester urethane resin or a mixture of such resins,
(B) 30-70 wt.% of a copolymerizable free monomer or a mixture thereof, it being understood that the wt.% of styrene and/or methyl methacrylate therein does not exceed 20 wt.%, and
(C) 0.05-5 wt.% of an initiator,
the total of the weight percentages of the components (A),(B) and (C) being 100.

The resin composition according to the invention are pre-eminently suitable for use in (re)lining. By reducing the quantity of volatile copolymerizable free monomer, such as styrene, the emission or penetration of volatile components is prevented.

It is a further advantage of resin compositions used according to the invention that they have a sufficiently long stability (pot life) in storage after impregnation, in the presence of the curing system, without curing starting. Moreover the mechanical properties (both measured in the laminate or in the flexible, sleeve-shaped objects, and in the ultimately cured (re)lining end products) are excellent. The curing properties are also good, if desired in the presence of fillers, additives, and inhibitors.

In the resin composition use is made in the invention of a curable resin (A). This curable resin (A) can be an unsaturated polyester resin, a vinyl ester resin, a vinyl ester urethane resin or a mixture of such resins.

Suitable unsaturated polyester resins that can be used in the resin composition according to the invention are polyesters obtained by reaction of organic compounds that contain carboxyl and/or alcohol groups. At least one of the starting compounds contains unsaturated compounds. Examples are maleate resins, isophthalic acidic resins, isophthalic acid / neopentyl glycol resins, orthophthalic acidic resins, orthophthalic acidic / neopentyl glycol resins, terephthalic acidic resins, dicyclopentadiene resins (DCPD) and the SYNOLITE™ resins and PALATAL™ resins of DSM Structural Resins (DRS).

Suitable vinyl ester resins, also known under the name epoxy (meth)acrylates, that can be used in the resin composition according to the invention are addition products of polyepoxides and unsaturated carboxylic acids, preferably acrylic acid and methacrylic acid. Suitable polyepoxides are epoxy novolak resins and in particular polyepoxides based on bisphenol A. A class of vinyl ester resins that is also suitable is formed by the esterification products of alkoxylated bisphenol A with (meth)acrylic acid. Examples are the ATLAC™ resins of DRS. The preparation method of unsaturated polyester resins and vinyl ester resins are known to the person skilled in the art, for example from the "Kunststoff-Handbuch band VIII: Polyester" (Vieweg und Goerden, ISBN 3-446-10108-2, 1973), part II, chapters 1 up to and including 3.

Suitable vinyl ester urethane resins are resins obtained by reacting a polyfunctional isocyanate with a polyhydric alcohol and/or a polyvalent amine and with a hydroxyalkyl (meth)acrylate. Examples are known from US-A-3297745, US-A-3772404, US-A-4618658, GB-A-2217722, DE-A-3744390 and EP-A-534197. Preferably the vinyl ester urethane resin is a vinyl ester urethane dimethacrylate.

The suitable quantity of resin (A) in the resin composition according to the invention lies between 30 and 70 wt.%. Preferably this quantity lies between 40 and 60 wt.%.

It is possible for the resin composition used according to the invention to also contain additives (components other than the components explicitly mentioned separately). The resin composition can for example also contain anti-shrinkage compounds, thixotropic agents, and thickeners.

Preferably the curable resin composition used according to the invention also contains as component (D) 1-30 wt.% of a monomer-free, unsaturated mixed resin that is liquid at room temperature, the total of the weight percentages of the components (A), (B), (C) and (D) being 100.

The quantity of component (D) in the resin mixture used according to the invention preferably lies between 5 and 40 wt.% relative to the total weight of the components of (A) up to and including (D).

The curable resin compositions used according to the invention in addition preferably contain a filler (E), in a weight ratio of 0.2:1 to 3:1 relative to the total weight of the components (A), (B), (C) and (D), the total of the weight percentages of the components (A), (B), (C) and (D) being 100.

The curable resin compositions used according to the invention contain a copolymerizable free monomer (B). Preferably (B) is chosen from the series formed by vinyl toluene, α-methyl styrene, tert butyl styrene, methyl methacrylate (MMA), hydroxyethyl methacrylate (HEMA), hydroxypropyl methacrylate (HPMA), vinyl ethers, vinyl esters, butanediol dimethacrylate (BDDMA), triethylene glycol dimethacrylate (TEGDMA), trimethylolpropane trimethacryate (TMPTMA), phenoxyethyl methacrylate (PEMA) and styrene. It is, of course, understood that the styrene and/or methyl methacrylate content does not exceed 20 wt.% relative to the total weight of the components (A) up to and including (D).

Most preferably the copolymerizable free monomer (B) is butanediol dimethacrylate (BDDMA) or hydroxypropyl methacrylate (HPMA).

The quantity of free monomer (B) in the resin composition used according to the invention lies between the 30 and 70 wt.%. Preferably this quantity lies between 40 and 60 wt.%.

The best results are achieved when the curable resin composition used according to the invention contains < 10 wt.% styrene and/or methyl methacrylate, calculated as wt.% of the total weight of the components (A), (B), (C) and (D).

More in particular the resin composition used according to the invention contains < 2 wt.% styrene and/or methyl methacrylate; most preferably, the resin composition according to invention is completely free of styrene or methyl methacrylate.

In the curable resin composition used according to the invention component (A) is preferably an unsaturated polyester resin, in particular preferably an isophthalic acidic resin, an isophthalic acid / neopentyl glycol resin, an orthophthalic acid / neopentyl glycol resin or a dicyclopentadiene resin.

The initiator (C), which is applied in the resin composition used according to the invention, is as a rule chosen from initiators which are suitable for thermal curing and/or are suitable for curing by photo-initiation. Thermal curing is understood to be curing of the resin composition (impregnated in the flexible, sleeve-shaped objects) by means of heat originating from heated water or gas used to pressurize the (re)lining. Photo-initiation is understood to be curing using irradiation with light of a suitable wavelength (photo irradiation). This is also referred to as UV cure. The light energy is generally supplied via lamps placed or moved forward in the hollow objects.

The quantity of component (C) in the resin composition used according to the invention as a rule lies between 0.1 and 10 wt.%. Preferably this quantity lies between 0.5 and 5 wt.%, even more preferably between 1 and 3.5 wt.%.

The initiator (C) in the curable resin compositions used according to the invention is therefore preferably suitable for thermal curing and/or for curing by photo irradiation.

The initiator (C) is preferably an organic peroxide, or a combination of two or more organic peroxides, each time/optionally in combination with a cobalt compound.

The organic peroxides used in the resin composition used according to the invention are chosen from the group of hydroperoxides and/or ketone peroxides. Ketone peroxides that are suitable for the invention are for example methyl-ethyl-ketone peroxide (MEKP), cyclohexanone peroxide, methyl-isobutyl-ketone peroxide, acetylacetone peroxide. Examples of suitable hydroperoxides are cumene hydroperoxide and tert butyl hydroperoxide.

The peroxide used can also be a mixture of such ketone peroxides and/or hydroperoxides. Preferably the chosen peroxide is; dibenzoyl peroxide, cumene hydroperoxide, tert butyl hydroperoxide and/or MEKP. The cobalt compound optionally used acts as an accelerator. A suitable cobalt compound is for example cobalt octoate or cobalt naphthenate.

Photo-initiators which are suitable for curing of the resin composition used according to the invention are described in DE-A-1694149, US-A-3715293, EP-A-7086, US-A-4071424, EP-A-185423, EP-A-97012 and NL-A-8403706.

Examples are (i) photo-initiators that generate initiator radicals via an intramolecular fission, such as benzoin ethers, benzil ketals and acyl phosphine oxides or (ii) photo-initiators that produce initiator radicals via intermolecular hydrogen abstraction; in these redox systems a hydrogen donor is required as co-initiator, such as (di)ketones plus a reducing agent.

The initiator (C) is a photo-initiator, preferably a bis (2,4,6-trimethylbenzoyl) phenylphosphine oxide.

Suitable unsaturated mixed resins (D) in the resin composition used according to the invention are resins that contain an unsaturation, are low molecular and have a flexibilizing effect. Preferably the unsaturated mixed resin is bisphenol A resins and/or maleate or fumarate resins with a glycol tail and/or a monoalcoholic terminal group (benzylalcohol, 2-ethylhexanol).

Suitable fillers (E) for the resin composition used according to the invention are for example aluminium trihydrate, calcium carbonate, mica, microcrystalline silica, quartz powder, barite and/or talc.

The invention relates to the use of a curable resin composition according to the invention in a flexible, sleeve-shaped object for use in (re)lining. According to the invention the flexible, sleeve-shaped objects consist of a supporting or reinforcing material that is impregnated with a curable resin composition as indicated in the description of the invention with regard to those resin compositions, at least one of the surfaces of the sleeve-shaped object being provided with a barrier layer that is impermeable to the curable resin composition.

The supporting or reinforcing material of which the flexible, sleeve-shaped object consists is for example a fibrous web or needle felt of glass fibres, silica fibres, quartz fibres, carbon fibres, boron fibres, metal fibres, asbestos fibres, polyamide fibres (for example Kevlar® of Du Pont), polyester fibres, cotton fibres, silk fibres, polyethylene fibres and jute fibres. The person skilled in the art can readily determine the suitable fibres for a specific application or desired property of the structural element to be formed. Carbon fibres are used for example for applications in which a low weight and a high rigidity are desirable.

The barrier layer that is impermeable to the curable resin composition and that is provided at at least one of the surfaces of the sleeve-shaped object is a layer of polyethylene, polypropylene, and polyamide.

Finally the present invention also provides for a method for (re)lining a tube, tank or vessel with a flexible, sleeve-shaped object as described above, where
(a) the flexible, sleeve-shaped object is introduced into a tube, tank or vessel, and then
(b) is pressurized therein with (i) a liquid or (ii) a gas, so that the flexible, sleeve-shaped object is forced against the inside of the wall of the tube, the tank or the vessel, and
(c) the curable resin composition present in the flexible, sleeve-shaped object is cured thermally in the case of (i) or (ii), or by photo-irradiation in the case of (ii).

The material from which a tube, tank or vessel itself is made can be chosen from a large series of suitable materials, for example cement, concrete, sandstone, GFK, polymer concrete, metal, steel, and PVC.

The invention will now be elucidated further on the basis of a few examples.

Four resin compositions (resin mixtures) were made with compositions as indicated in Table 1.

**Table 1**

| | Resin mixture 1 | Resin mixture 2 | Resin mixture 3 | Resin mixture 4 |
|---|---|---|---|---|
| Resin A | 100 | | 35 | |
| Resin B | | 80 | 50 | |
| Resin C | | 20 | 10 | 15 |
| Resin D | | | | 85 |
| Styrene | | | 5 | |

### Resin A

Unsaturated polyester resin dissolved in 1,4-BDDMA (50 wt.% on total). The unsaturated polyester resin is prepared as follows:
162 g maleic anhydride, 127 g orthophthalic anhydride, 206 g neopentyl glycol, 10 g propylene glycol and 40 g diethylene glycol are heated to 210 °C within 2 hours while being stirred continuously in a standard polycondensation reactor, use being made of a vacuum (to max. 0.1 bar). The synthesis is ended at an acid number of 20-30 mg KOH/g and a viscosity at 120 °C of 60-100 dPa.s. After reaching the end point the temperature is lowered to 160 °C and from 190 °C, after the addition of 0.03 g monotert-butyl hydroquinone, dissolving in 500 g 1,4-BDDMA is started.

### Resin B

Unsaturated polyester resin dissolved in 1,4-BDDMA (35 wt.% on total). The unsaturated polyester resin is prepared as follows:
211 g maleic anhydride, 166 g orthophthalic anhydride, 267 g neopentyl glycol, 12 g propylene glycol and 52 g diethylene glycol are heated to 210 °C within 2 hours while being stirred continuously in a standard polycondensation reactor, use being made of a vacuum (to max. 0.1 bar). The synthesis is ended at an acid number of 20-30 mg KOH/g and a viscosity at 120 °C of 60-100 dPa.s. After reaching the end point the temperature is lowered to 160 °C and from 190 °C, after the addition of 0.04 g monotert-butyl hydroquinone, dissolving in 350 g 1,4-BDDMA is started.

### Resin C

Monomer-free unsaturated mixed resin, liquid at room temperature.
This mixed resin was obtained by heating 938 g polypropylene glycol bisphenol A, 89 g fumaric acid and 0.12 g hydroquinone within 2 hours to 210°C with continuous stirring in a standard polycondensation reactor, use being made of a vacuum (to max. 0.1 bar). The synthesis is ended at an acid number of < 20 mg KOH/g and a viscosity at 23°C of < 4 dPa.s.

### Resin D

Vinyl ester urethane resin on the basis of 1,4-BDDMA.
The above vinyl ester urethane resin was obtained by mixing 1 ml dibutyltin dilaurate into 317 g isomer mixture of diphenylmethane diisocyanate. At 40 °C 39 g dipropylene glycol is added dropwise. Stirring is continued for 1 hour. Then 380 g hydroxypropyl methacrylate is added dropwise, upon which the reaction temperature rises to 80 °C. At 90 °C stirring is continued until the remaining isocyanate content has dropped to less than 0.01% (melt viscosity at 100 °C approximately 750 mPa.s). The resin is inhibited with 0.2 g monotert-butyl-hydroquinone. As reactive thinner 650 g 1,4-BDDMA is added. The resin has a viscosity of approximately 250 mPa.s.

### Mechanical properties (unreinforced material):

The mechanical properties of the unreinforced resin mixtures were measured, after curing at 50°C in the presence of 0.8% bis (4-tert-butylcyclohexyl) peroxydicarbonate + 1.0% tert butyl perbenzoate + 1.0% of a 1% solution of cobalt octoate and an aliphatic ester (accelerator NL-49-P (AKZO Nobel) and an extra postcure of 24 hours at 60°C followed by 24 hours at 80°C, and are stated in Table 2. The ISO standards of the used test methods are also stated in Table 2.

**Table 2**

| | Test method | Resin mixture 1 | Resin mixture 2 | Resin mixture 3 | Resin mixture 4 |
|---|---|---|---|---|---|
| Tensile strength [MPa] | ISO 527-2 | 54 | 37 | 57 | 21 |
| E-modulus [MPa] | ISO 527-2 | 4116 | 2000 | 3130 | 2150 |
| Elongation at break [%] | ISO 527-2 | 1.4 | 2.4 | 2.1 | 1.0 |
| HDT [°C] | ISO 75-Ae | 180 | 71 | 97 | 78 |

### Curing properties (unreinforced material):

The resin mixtures 1 up to and including 4 were cured at 60°C with the addition of 0.8% bis (4-tert-butylcyclohexyl) peroxydicarbonate + 1.0% tert butyl perbenzoate + 1.0% of a 1% solution of cobalt octoate and an aliphatic ester (accelerator NL-49-P (AKZO Nobel). The curing properties are stated in Table 3.

**Table 3**

| Curing at 60°C | Resin mixture 1 | Resin mixture 2 | Resin mixture 3 | Resin mixture 4 |
|---|---|---|---|---|
| Gelling time [min] | 27 | 10 | 17 | 20 |
| Peak time [min] | 40 | 18 | 25 | 25 |
| Exothermic [°C] | 105 | 70 | 160 | 155 |

### Mechanical properties:

Of (re)lining laminate (6 mm thickness) produced by means of vacuum injection, with as the supporting material polyester needle felt cured at 80°C between 2 metal heating plates, the mechanical properties are stated in Table 4. This table also gives the ISO standards of the test methods used for the determination of the mechanical properties of the (re)lining laminate.

**Table 4**

| Composition in grams | | Laminate |
|---|---|---|
| Resin mixture 1 | | 100 |
| Al₂(OH)₃ filler | | 40 |
| Air release agent (BYK-A515) | | 0.2 |
| Bis (4-tert-butylcyclohexyl) peroxydicarbonate | | 0.8 |
| Tert butyl perbenzoate | | 1.0 |
| Cobalt octoate (1% solution) | | 1.0 |
| Flexural strength [MPa] | ISO 178 | 52 |
| E-modulus [MPa] | ISO 178 | 4190 |

## Claims

1. Use of a curable resin composition containing a curable resin dissolved in a copolymerizable monomer and an initiator, in a flexible, sleeve-shaped object, **characterized in that**
(i) the curable resin composition consists of:
(A) 30-70 wt.% of an unsaturated polyester resin, a vinyl ester resin, a vinyl ester urethane resin or a mixture of such resins,
(B) 30-70 wt.% of a copolymerizable free monomer or a mixture thereof, it being understood that the wt.% of styrene and/or methyl methacrylate therein does not exceed 20 wt.%, and
(C) 0.05-5 wt.% of an initiator,
the total of the weight percentages of the components (A),(B) and (C) being 100; and **in that**
(ii) the flexible, sleeve-shaped object consists of a supporting or reinforcing material that has been impregnated with the said curable resin composition; and **in that**
(iii) at least one of the surfaces of the flexible, sleeve-shaped object is provided with a barrier layer that is impermeable to the curable resin composition.

2. Use of a curable resin composition according to claim 1, **characterized in that** the resin composition also contains
(E) a filler in a weight ratio of 0.2:1 to 3:1 relative to the total weight of the components (A), (B), and (C),
the total of the weight percentages of the components (A), (B), and (C) being 100.

3. Use of a curable resin composition according to any one of claims 1-2, **characterized in that** the copolymerizable free monomer (B) has been chosen from the series formed by vinyl toluene, α-methyl styrene, tert butyl styrene, methyl methacrylate, hydroxyethyl methacrylate, hydroxypropyl methacrylate, vinyl ethers, vinyl esters, butanediol dimethacrylate, triethylene glycol dimethacrylate, trimethylolpropane trimethacryate, phenoxyethyl methacrylate and styrene.

4. Use of a curable resin composition according to claim 3, **characterized in that** the copolymerizable free monomer is butanediol dimethacrylate or hydroxypropyl methacrylate.

5. Use of a curable resin composition according to any one of claims 1-4, **characterized in that** the resin composition contains < 10 wt.% styrene and/or methyl methacrylate, calculated as wt.% of the total weight of the components (A), (B), and (C).

6. Use of a curable resin composition according to claim 5, **characterized in that** the resin composition contains < 2 wt.% styrene and/or methyl methacrylate, is preferably completely free of styrene and/or methyl methacrylate.

7. Use of a curable resin composition according to any one of claims 1-6, **characterized in that** component (A) is an unsaturated polyester resin, preferably an isophthalic acidic resin, an isophthalic acid / neopentyl glycol resin, an orthophthalic acid / neopentyl glycol resin or a dicyclopentadiene resin.

8. Use of a curable resin composition according to any one of claims 1-7. **characterized in that** the initiator (C) is an organic peroxide, or a combination of 2 or more organic peroxides, each time/optionally in combination with a cobalt compound.

9. Use of a curable resin composition according to any one of claims 1-7, **characterized in that** the initiator (C) is a photo-initiator is preferably bis(2,4,6-trimethylbenzoyl)-phenylphosphine oxide.

10. Use of a curable resin composition according to any one of claims 2-9, **characterized in that** the filler (E) has been chosen from aluminium trihydrate, calcium carbonate, mica, microcrystalline silica, quartz powder, barite and/or talc.

11. Process for relining a tube, tank or vessel with a flexible, sleeve-shaped object while using a curable resin composition according to of claims 1-10, **characterized in that**
(a) the flexible, sleeve-shaped object is introduced into a tube, tank or vessel, and then
(b) is pressurized therein with (i) a liquid or (ii) a gas, so that the flexible, sleeve-shaped object is forced against the inside of the wall of the tube, the tank or the vessel, and
(c) the curable resin composition present in the flexible, sleeve-shaped object is cured thermally in the case of (i) or (ii), or by photo-irradiation in the case of (ii).

## Patentansprüche

1. Verwendung einer härtbaren Harzzusammensetzung, enthaltend ein in einem copolymerisierbaren Monomer gelöstes härtbares Harz und einen Initiator, in einem flexiblen, hülsenförmigen Objekt,
**dadurch gekennzeichnet, dass**
(i) die härtbare Harzzusammensetzung aus:
(A) 30-70 Gew.-% eines ungesättigten Polyesterharzes, eines Vinylesterharzes, eines Vinylester-Urethanharzes oder eines Gemisches derartiger Harze,
(B) 30-70 Gew.-% eines copolymerisierbaren freien Monomers oder eines Gemisches davon, wobei zu verstehen ist, dass die Gew.-% an Styrol und/oder Methylmethacrylat darin 20 Gew.-% nicht übersteigen, und
(C) 0,05-5 Gew.-% eines Initiators besteht,
wobei die Summe der Gew.-% der Komponenten (A), (B) und (C) 100 beträgt, und **dadurch**, dass
(ii) das flexible, hülsenförmige Objekt aus einem tragenden oder verstärkenden Material besteht, welches mit der härtbaren Harzzusammensetzung imprägniert worden ist,
und **dadurch**, dass
(iii) mindestens eine der Oberflächen des flexiblen, hülsenförmigen Objektes mit einer Sperrschicht ausgestattet ist, welche undurchlässig für die härtbare Harzzusammensetzung ist.

2. Verwendung einer härtbaren Harzzusammensetzung nach Anspruch 1, **dadurch gekennzeichnet, dass** die Harzzusammensetzung auch
(E) ein Füllmittel in einem Gewichtsverhältnis von 0,2:1 bis 3:1, relativ zu dem Gesamtgewicht der Komponenten (A), (B) und (C), enthält,
wobei die Summe der Gew.-% der Komponenten (A), (B) und (C) 100 beträgt.

3. Verwendung einer härtbaren Harzzusammensetzung nach einem der Ansprüche 1 bis 2, **dadurch gekennzeichnet, dass** das copolymerisierbare freie Monomer (B) aus der Serie, gebildet aus Vinyltoluol, α-Methylstyrol, tert-Butylstyrol, Methylmethacrylat, Hydroxyethylmethacrylat, Hydroxypropylmethacrylat, Vinylethern, Vinylestern, Butandioldimethacrylat, Triethylenglycoldimethacrylat, Trimethylolpropantrimethacrylat, Phenoxyethylmethacrylat und Styrol, ausgewählt worden ist.

4. Verwendung einer härtbaren Harzzusammensetzung nach Anspruch 3, **dadurch gekennzeichnet, dass** das copolymerisierbare freie Monomer Butandioldimethacrylat oder Hydroxypropylmethacrylat ist.

5. Verwendung einer härtbaren Harzzusammensetzung nach einem der Ansprüche 1 bis 4, **dadurch gekennzeichnet, dass** die Harzzusammensetzung < 10 Gew.-% Styrol und/oder Methylmethacrylat, berechnet als Gew.-% des Gesamtgewichts der Komponenten (A), (B) und (C), enthält.

6. Verwendung einer härtbaren Harzzusammensetzung nach Anspruch 5, **dadurch gekennzeichnet, dass** die Harzzusammensetzung < 2 Gew.-% Styrol und/oder Methylmethacrylat enthält und vorzugsweise vollständig frei von Styrol und/oder Methylmethacrylat ist.

7. Verwendung einer härtbaren Harzzusammensetzung nach einem der Ansprüche 1 bis 6, **dadurch gekennzeichnet, dass** Komponente (A) ein ungesättigtes Polyesterharz, vorzugsweise ein Isophthalsäureharz, ein Isophthalsäure/Neopentylglycolharz, ein Orthophthalsäure/Neopentylglycolharz oder ein Dicyclopentadienharz, ist.

8. Verwendung einer härtbaren Harzzusammensetzung nach einem der Ansprüche 1 bis 7, **dadurch gekennzeichnet, dass** der Initiator (C) ein organisches Peroxid oder eine Kombination aus 2 oder mehreren organischen Peroxiden ist, jeweils/gegebenenfalls in Kombination mit einer Kobaltverbindung.

9. Verwendung einer härtbaren Harzzusammensetzung nach einem der Ansprüche 1 bis 7, **dadurch gekennzeichnet, dass** der Initiator (C) ein Photoinitiator ist, vorzugsweise Bis(2,4,6-trimethylbenzoyl)phenylphosphinoxid.

10. Verwendung einer härtbaren Harzzusammensetzung nach einem der Ansprüche 2 bis 9, **dadurch gekennzeichnet, dass** das Füllmittel (E) aus Aluminiumtrihydrat, Calciumcarbonat, Glimmer, mikrokristallinem Silika, Quarzpulver, Baryt und/oder Talk ausgewählt worden ist.

11. Verfahren zum Wiederauskleiden eines Schlauches, Tanks oder Gefäßes mit einem flexiblen, hülsenförmigen Objekt unter Verwendung einer härtbaren Harzzusammensetzung nach einem der Ansprüche 1 bis 10, **dadurch gekennzeichnet, dass**
(a) das flexible, hülsenförmige Objekt in einen Schlauch, Tank oder ein Gefäß eingeführt wird, und dann
(b) darin mit (i) einer Flüssigkeit oder (ii) einem Gas unter Druck gesetzt wird, sodass das flexible, hülsenförmige Objekt gegen die Innenseite der Wand des Schlauches, des Tanks oder des Gefäßes gezwungen wird, und
(c) die in dem flexiblen, hülsenförmigen Objekt vorhandene härtbare Harzzusammensetzung in dem Fall von (i) oder (ii) thermisch, oder in dem Fall von (ii) durch Lichtbestrahlung gehärtet wird.

## Revendications

1. Utilisation d'une composition de résine durcissable contenant une résine durcissable dissoute dans un monomère copolymérisable et un amorceur, dans un objet flexible, en forme de manchon, **caractérisée en ce que**
(i) la composition de résine durcissable est constituée de :
(A) 30 à 70 % en poids d'une résine de polyester insaturé, une résine d'ester de vinyle, une résine d'ester de vinyle uréthane ou d'un mélange de telles résines,
(B) 30 à 70 % en poids d'un monomère libre copolymérisable ou d'un mélange de celui-ci, étant entendu que le % en poids de styrène et/ou de méthacrylate de méthyle ne dépasse pas 20 % en poids, et
(C) 0,05 à 5 % en poids d'un amorceur,
le total des pourcentages en poids des composants (A), (B) et (C) étant 100 ; et **en ce que**
(ii) l'objet flexible, en forme de manchon est constitué d'un matériau de support ou de renforcement qui est imprégné avec ladite composition de résine durcissable ; et **en ce que**
(iii) au moins l'une des surfaces de l'objet flexible, en forme de manchon est munie d'une couche barrière qui est imperméable à la composition de résine durcissable.

2. Utilisation d'une composition de résine durcissable selon la revendication 1, **caractérisée en ce que** la composition de résine contient aussi
(E) une charge dans un rapport en poids de 0,2 : 1 à 3 : 1 par rapport au poids total des composants (A), (B) et (C), le total des pourcentages en poids des composants (A), (B) et (C) étant 100.

3. Utilisation d'une composition de résine durcissable selon l'une quelconque des revendications 1 et 2, **caractérisée en ce que** le monomère libre copolymérisable (B) est choisi parmi la série formée par le vinyltoluène, l'α-méthylstyrène, le tert.-butylstyrène, le méthacrylate de méthyle, le méthacrylate d'hydroxyéthyle, le méthacrylate d'hydroxypropyle, les vinyléthers, les esters de vinyle, le diméthacrylate de butanediol, le diméthacrylate de triéthylèneglycol, le triméthacrylate de triméthylolpropane, le méthacrylate de phénoxyéthyle et le styrène.

4. Utilisation d'une composition de résine durcissable selon la revendication 3, **caractérisée en ce que** le monomère libre copolymérisable est le diméthacrylate de butanediol ou le méthacrylate d'hydroxypropyle.

5. Utilisation d'une composition de résine durcissable selon l'une quelconque des revendications 1 à 4, **caractérisée en ce que** la composition de résine contient < 10 % en poids de styrène et/ou de méthacrylate de méthyle, calculé en % en poids du poids total des composants (A), (B) et (C).

6. Utilisation d'une composition de résine durcissable selon la revendication 5, **caractérisée en ce que** la composition de résine contient < 2 % en poids de styrène et/ou de méthacrylate de méthyle, est de préférence complètement dénuée de styrène et/ou de méthacrylate de méthyle.

7. Utilisation d'une composition de résine durcissable selon l'une quelconque des revendications 1 à 6, **caractérisée en ce que** le composant (A) est une résine de polyester insaturé, de préférence une résine d'acide isophtalique, une résine d'acide isophtalique/néopentylglycol, une résine d'acide orthophtalique/néopentylglycol ou une résine de dicyclopentadiène.

8. Utilisation d'une composition de résine durcissable selon l'une quelconque des revendications 1 à 7, **caractérisée en ce que** l'amorceur (C) est un peroxyde organique, ou une combinaison de 2 ou plus des peroxydes organiques, chaque fois éventuellement en combinaison avec un composé du cobalt.

9. Utilisation d'une composition de résine durcissable selon l'une quelconque des revendications 1 à 7, **caractérisée en ce que** l'amorceur (C) est un photo-initiateur et est de préférence l'oxyde de bis(2,4,6-triméthylbenzoyl)-phénylphosphine.

10. Utilisation d'une composition de résine durcissable selon l'une quelconque des revendications 2 à 9, **caractérisée en ce que** la charge (E) est choisie parmi le trihydrate d'aluminium, le carbonate de calcium, le mica, la silice microcristalline, la poudre de quartz, la barytine et/ou le talc.

11. Procédé pour le regarnissage d'un tube, d'un réservoir ou d'un récipient avec un objet flexible, en forme de manchon en utilisant une composition de résine durcissable selon les revendications 1 à 10, **caractérisé en ce que**
(a) l'on introduit l'objet flexible, en forme de manchon dans le tube, le réservoir ou le récipient, et ensuite
(b) on met sous pression avec (i) un liquide ou (ii) un gaz, de manière à presser l'objet flexible, en forme de manchon contre l'intérieur de la paroi du tube, du réservoir ou du récipient, et
(c) on durcit la composition de résine durcissable présente dans l'objet flexible, en forme de manchon, thermiquement dans le cas de (i) ou (ii), ou par photo-irradiation dans le cas de (ii).
